# EUROPÄISCHE PATENTSCHRIFT

(11) **EP 1 912 541 B1**
(45) Veröffentlichungstag und Bekanntmachung des Hinweises auf die Patenterteilung: **14.09.2016**
(21) Anmeldenummer: 06777486.9
(22) Anmeldetag: 27.06.2006
(51) Int. Cl.: A47J 36/10, A47J 27/21

(54) **ABNEHMBARER KANNENDECKEL**
REMOVABLE POT LID
COUVERCLE AMOVIBLE POUR RECIPIENT

(30) Priorität: 01.08.2005 DE 102005036600
(43) Veröffentlichungstag der Anmeldung: 23.04.2008
(73) Patentinhaber: BSH Hausgeräte GmbH, 81739 München (DE)
(72) Erfinder: JÄGER, Harald, 83349 Palling (DE); KIPPER, Stephan, 33607 Bielefeld (DE); STIEF, Peter, 83329 Waging am See (DE)
(86) Internationale Anmeldenummer: PCT/EP2006/063592
(87) Internationale Veröffentlichungsnummer: WO 2007/014806

(56) Entgegenhaltungen:
- EP-A- 0 714 623
- US-A1- 2004 007 136
- US-B1- 6 172 341

## Beschreibung

Die Erfindung betrifft ein Haushaltsgerät zur Aufnahme einer Flüssigkeit mit einem Behälter mit einem Deckel, mit einer Schwenkhalterung, in der der Deckel um eine Schwenkachse an dem Gehäuse zwischen einer Schließ- und einer Öffnungsstellung schwenkbar gelagert ist, und aus der der Deckel (4) entnehmbar ausgebildet ist, mit einer Verriegelungseinrichtung im Deckel, die ihn in der Schließstellung am Behälter verriegelt und mit einer entfernt vom Deckel am Haushaltsgerät angeordneten Betätigungseinrichtung, die eine Entriegelung des Deckels ermöglicht. Derartige Haushaltsgeräte können zum Beispiel als Kannen zur Aufbewahrung und Bevorratung oder als Wasserkocher zur Zubereitung von Getränken dienen.

Aus der DE 199 05 641 A1 ist ein elektrisch beheizbarer Wasserkocher bekannt, der einen schwenkbaren Deckel aufweist. Der Deckel hat an zwei einander gegenüberliegenden Seiten jeweils eine Öffnung, die in einer Schließstellung des Deckels verdeckt ist. Durch die Öffnungen ragen heraus- bzw. hereinbewegbare Hebel, die in der geschlossenen Stellung des Deckels in Rastlöcher in einer Behälterwandung des Wasserkochers eingreifen. Die Entriegelung des Deckels wird durch eine Taste am Griff des Wasserkochers ermöglicht. Die Taste ist so am Griff platziert, dass sie von einer den Wasserkocher am Griff haltenden Griffhand bequem betätigt werden kann. Durch Druck der Taste wird die durch die Hebel gebildete Verriegelung des Deckels im Behälter gelöst, indem der Tastendruck auf eine innerhalb des Deckels angeordnete Kulisse weitergeleitet wird. Sie wiederum schiebt die Hebel aus den Öffnungen heraus. Daraufhin kann der Deckel manuell in eine Offenstellung überführt werden. Aufgrund der aufwändigen Mechanik und der beengten Platzverhältnisse am Scharnier haben derartige schwenkbare Deckel von Wasserkochern oder dergleichen häufig nur einen sehr eingeschränkten Öffnungswinkel. Damit werden sowohl die Bedienung, nämlich das Befüllen des Haushaltsgeräts, als auch dessen Reinigung wesentlich erschwert.

Die EP 0 714 623 A1 offenbart einen Kochbehälter mit einem Deckel, wobei der Deckel durch ein Gelenk im Bund derart befestigt ist, dass er frei geöffnet und frei geschlossen werden kann und wobei der Deckel aus einer Halterung entnehmbar angeordnet ist. Die US006172341B1 offenbart ein Haushaltsgerät zur Aufnahme einer Flüssigkeit, mit einem schwenkbaren Deckel mit einer Verriegelungseinrichtung im Deckel und einer Betätigungseinrichtung die eine Entriegelung des Deckels ermöglicht.

Aufgabe der vorliegenden Erfindung ist es daher, ein Haushaltsgerät anzugeben, dessen Deckel verriegelbar ist, dessen Entriegelung bequem durch eine Griffhand erfolgen kann und dessen Reinigung aber dennoch deutlich vereinfacht ist.

Erfindungsgemäß wird diese Aufgabe dadurch gelöst, dass bei einem Haushaltsgerät der eingangs genannten Art der Deckel lösbar an der Schwenkhalterung befestigt ist und die Betätigungseinrichtung so ausgebildet ist, dass sie zur Entriegelung des Deckels eine Druckkraft auf die Verriegelungseinrichtung überträgt. Die Erfindung löst sich also von dem Gedanken, die Öffnungsmechanik bzw. das Scharnier des Deckels dahingehend zu verändern, dass ein größerer Öffnungswinkel erreicht werden kann. Die leichtere Zugänglichkeit des Innenraums des Haushaltsgeräts erreicht sie vielmehr auf überraschend einfache Weise, indem sie den Deckel vom Behälter trennbar ausbildet. Damit steht die gesamte vom Deckel zu verschließende Öffnung des Behälters zum Befüllen und insbesondere zum Reinigen des Haushaltsgeräts zur Verfügung. Durch den abnehmbaren Deckel wird aber nicht nur die Reinigung des Innenraums des Behälters erleichtert, sondern auch die des Deckels. Dies ist vor allem Dingen bei solchen Geräten von Bedeutung, bei denen der Deckel bei der Benutzung besonders beaufschlagt wird, wie zum Beispiel bei Kannen von Kaffeemaschinen. Deren Deckel werden in aller Regel von Kaffee durchströmt. Handelt es sich zudem um Thermoskannen, so weisen die Deckel in der Regel eine Ventilanordnung auf, die ein übermäßiges Entweichen von Wärme verhindert. Die Ventilanordnung umfasst bewegliche Teile, die mit dem Kaffee in Berührung kommen und daher separat gereinigt werden müssen. Mit einem abnehmbaren Deckel wird dieser Reinigungsvorgang wesentlich erleichtert.

Die Verriegelungseinrichtung muss nur zur Entriegelung des Deckels betätigt werden. Da die Entriegelung also ausschließlich in der Schließstellung des Deckels vorgenommen wird, genügt eine mechanische Kopplung an einer Schnittstelle zwischen der Betätigungseinrichtung und der Verriegelungseinrichtung ausschließlich in der Schließstellung des Deckels. Ist der Deckel geöffnet, kann diese Kopplung also durchaus unterbrochen sein. Das Zusammenwirken
zwischen der Betätigungseinrichtung und der Verriegelungseinrichtung in der Entriegelungsrichtung beruht auf einer Druckkraft. Die Schnittstelle kann konstruktiv besonders einfach ausgebildet werden. Dazu kann die mechanische Kette aus einem druckbetätigten Schieber bestehen, der an seinem einen Ende von der Betätigungseinrichtung druckbelastet wird und diese Druckkraft auf der anderen Seite an den Deckel weiterleitet. Dort kann sie der Schieber über eine Anlagefläche, die in der Schließstellung des Deckels an einer entsprechenden Fläche einer Kulisse im Deckel anliegt, an die Verriegelungseinrichtung weiterleiten. Bei der Demontage des Deckels werden also lediglich die einander zugeordneten Anlageflächen von einander getrennt. Die Montage des Deckels kann sich daher ebenso einfach gestalten.

Abnehmbare Deckel für Getränkebehälter sind bei einfacheren Konstruktionen bereits bekannt. Bei dem vorliegenden Deckel ist jedoch eine mechanische Kopplung zwischen der entfernt vom Deckel angeordneten Betätigungseinrichtung und der Verriegelungseinrichtung im Deckel sicherzustellen. Aufgrund der einfachen Kraftübertragung zwischen der Betätigungseinrichtung und der Verriegelungseinrichtung kann die Schnittstelle an nahezu jeder beliebigen Kontaktstelle zwischen dem Deckel und dem Behältergehäuse angeordnet sein. Die Schwenkhalterung des Deckels umfasst einen Köcher, der schwenkbar an dem Behälter gelagert ist und in dem der Deckel mit einem Verbindungsabschnitt befestigbar ist. Es muss gewährleistet sein, dass die Betätigungseinrichtung in der Schließstellung des Deckels eine Druckkraft auf die Verriegelungseinrichtung übertragen kann. Dies bedeutet u. a., dass die Lagerung des Deckels und die Schnittstelle zur Übertragung der Druckkraft nicht zwingend räumlich zusammen fallen müssen.

Die Schnittstelle und die Schwenkhalterung können aber auch zusammenfallen. Erfindungsgemäß umfasst daher die Schwenkhalterung einen Köcher, der schwenkbar an dem Behälter gelagert ist und in dem der Deckel mit einem Verbindungsabschnitt befestigbar ist. Auf diese Weise kann zum einen eine stabile, aber lösbare Halterung des Deckels am Behälter gewährleistet und zum anderen eine zuverlässig koppel- und entkoppelbare Schnittstelle zwischen der Betätigungseinrichtung am Haushaltsgerät einerseits und der Verriegelungseinrichtung im Deckel andererseits ausgebildet werden.

Einer bequemen Bedienung des Haushaltsgeräts kommt eine einfache Montage und Demontage des Deckels entgegen. Nach einer weiteren vorteilhaften Ausgestaltung der Erfindung ist daher der Verbindungsabschnitt des Deckels in den Köcher einsteckbar und weist eine Wulst zur Arretierung des Verbindungsabschnitts im Köcher auf. Eine derartige Befestigung stellt nicht nur eine einfache Konstruktion dar, sondern ist auch einfach zu bedienen und leicht nachzuvollziehen. Über die Ausbildung einer Wulst am Verbindungsabschnitt ist zudem auf einfache Weise die Haltekraft des Verbindungsabschnitts im Köcher bzw. die zur Demontage- bzw. Montage des Deckels erforderliche Kraft einstellbar.

Je weniger Handgriffe zur Bedienung eines Haushaltsgeräts erforderlich sind, als umso komfortabler wird es empfunden. Bei Getränkebehältern, wie zum Beispiel Kannen oder Wasserkochern, ist man daher bemüht, eine einhändige Bedienung des Geräts zu ermöglichen. Nach einer weiteren Ausgestaltung der Erfindung ist daher zwischen dem Behälter und dem Deckel ein Federelement angeordnet, das den Deckel in Öffnungsstellung vorspannt. Die Feder wird also erst entlastet, wenn über die Betätigungseinrichtung die Verriegelung des Deckels am Behälter gelöst wird, so dass der Deckel dann in einen Öffnungswinkel aufspringt. Um eine Flüssigkeit aus dem Behälter ausschenken zu können, muss der Deckel eine Ausgießöffnung lediglich einen Spalt weit freigeben. Dafür genügt ein geringer Öffnungswinkel. Beim Schließen des Deckels durch Druck auf seine Oberseite wird das Federelement für den nächsten Öffnungsvorgang vorgespannt. Das Federelement kann dabei entweder im Deckel angeordnet sein und auf den Behälter wirken oder am Behälter gelagert sein und auf den Deckel oder auf den Köcher wirken.

Das Prinzip der Erfindung wird im Folgenden anhand einer Zeichnung beispielshalber noch näher erläutert. In der Zeichnung zeigen:
Figur 1: eine Warmhalte-Kanne einer Kaffeemaschine mit einem Deckel in Öffnungsstellung,
Figur 2: eine Teilansicht der Kaffeekanne mit abgenommenem Deckel,
Figur 3: eine Detailansicht eines Schüttrandes der Kanne,
Figur 4: eine Schnittansicht des Schüttrandes mit eingesetztem und verriegeltem Kannendeckel,
Figur 5: eine Schnittansicht des Schüttrandes mit eingesetztem und entriegeltem Kannendeckel,
Figur 6: eine teilgeschnittene Draufsicht auf einen Schüttrand gemäß Figur 4 und
Figur 7: eine teilgeschnittene Draufsicht auf den Schüttrand gemäß Figur 5.

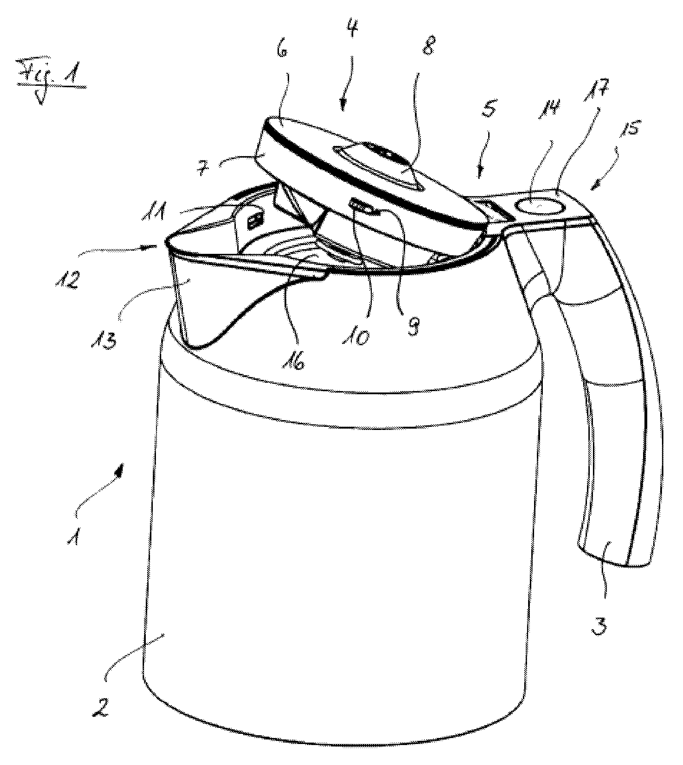

Figur 1 stellt eine Warmhaltekanne 1 für eine nicht dargestellte Kaffeemaschine dar. Sie umfasst einen Behälter 2, an dem ein Griff 3 und ein Deckel 4 angeordnet sind. Der Deckel 4 ist über ein Scharnier 5 schwenkbar gegenüber dem Behälter 2 befestigt. Er umfasst außerdem eine Deckeloberseite 6 und eine Deckelunterseite 7. In der Deckeloberseite 6 ist ein Einlaufventil 8 angeordnet, das den gebrühten Kaffee aus der Kaffeemaschine in einen Innenraum der Kanne 1 leitet. Die Deckelunterseite 7 weist Öffnungen 9 auf, aus denen vordere Abschnitte von in Figur 1 nicht weiter erkennbaren Winkelhebeln 10 hindurchragen. Die Öffnungen 9 in der Deckelunterseite 7 korrespondieren mit Verriegelungstaschen 11, die in einem Schüttrand 12 auf dem Behälter 2 angeordnet sind. Der Schüttrand 12 ist ein Kunststoff-Formteil, der den oberen Abschluss des Behälters 2 bildet und an dem sowohl der Griff 3 als auch ihm gegenüberliegend ein Ausgießer 13 angeordnet ist. Er umfasst außerdem das Scharnier 5, in dem der Deckel 4 gelagert ist. Er nimmt eine Öffnungstaste 14 auf, die an einem oberen Ende 15 des Griffs 3 neben dem Scharnier 5 angeordnet ist. Der Schüttrand 12 umschließt außerdem eine Öffnung 16 des Behälters 2, die in einen Innenraum des Behälters 2 führt.

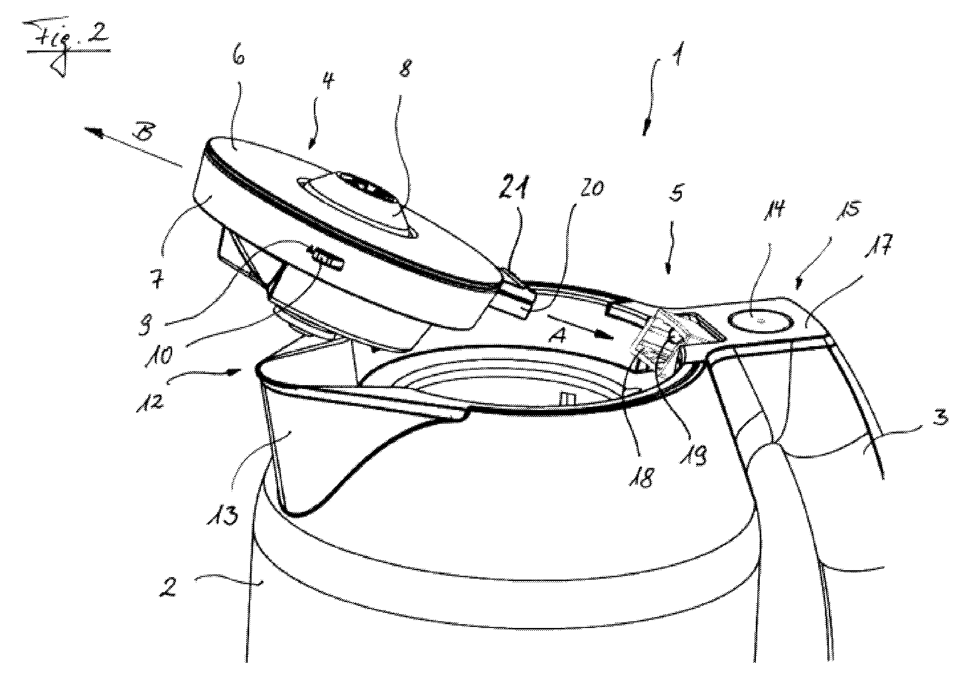

Der Aufbau des Scharniers 5 ist in Figur 2 deutlicher zu erkennen, weil sie die Kanne 1 mit einem abgenommenen Deckel 4 zeigt. Das obere Ende 15 des Griffes 3, also der Bereich um die Öffnungstaste 14 und das Scharnier 5 herum, ist durch eine Schüttrandabdeckung 17 verschlossen. Das Scharnier 5 umfasst einen Köcher 18, der über zwei Lagerzapfen 19 im Schüttrand 12 schwenkbar gelagert ist. Der Kannendeckel 4 weist einen Verbindungsabschnitt 20 auf, der auf seiner Oberseite eine querverlaufende Wulst 21 trägt. Zur Montage des abgenommenen Deckels 4 wird er in Richtung des Pfeils A, also mit dem Verbindungsabschnitt 20 voraus, in den Köcher 18 eingeschoben. Die Verschnappwulst 21 rastet in der Endstellung in ein nicht dargestelltes Gegenrastelement ein und definiert so die gewünschte Endlage des Deckels 4. Die entgegengesetzte Demontagerichtung des Deckels 4 ist durch den Pfeil B symbolisiert.

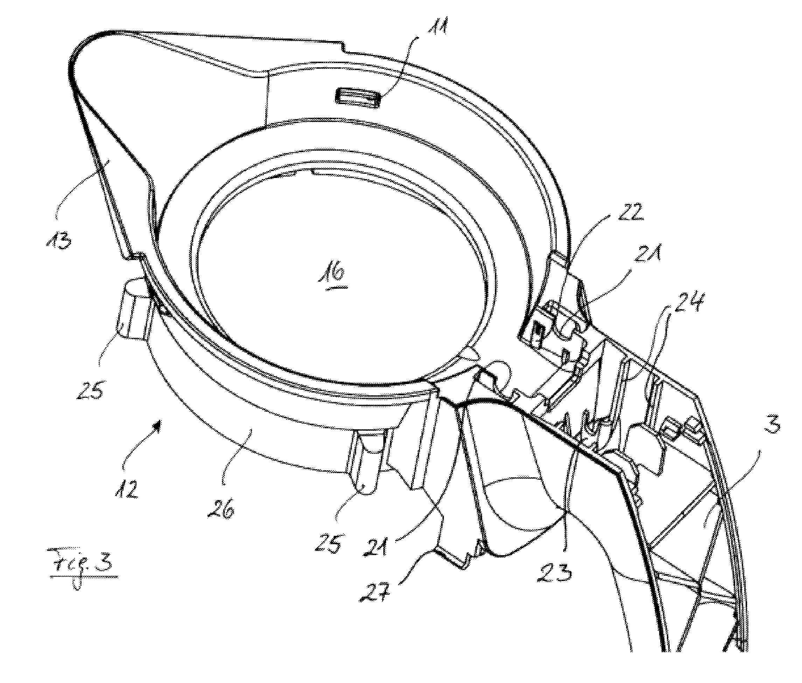

Der Schüttrand 12 ist ausschnittsweise und separat in Figur 3 dargestellt. Der Deckel 4, das Scharnier 5, die Öffnungstaste 14 und die Schüttrandabdeckung 17 sind abgenommen, so dass Lagerschalen 21 erkennbar werden, in denen die Lagerzapfen 19 des Köchers 18 gelagert sind. In einer Richtung zum Ausgießer 13 hin vor den Lagerschalen 21 sind Arretierrippen 22 zur Definition einer Öffnungsstellung des Deckels 4 angeordnet. Außerdem ist in dieser Ansicht eine von zwei Lagerpfannen 23 für einen später zu erläuternden Umlenkhebel 34 und Führungsrippen 24 zur Definition der Bewegungsrichtung der Öffnungstaste 14 zu erkennen. Mittels Zentriernasen 25, die an einem ringförmigen Flansch 26 am Schüttrand 12 angeordnet sind, wird jener innerhalb des Behälters 2 zentriert. Schließlich sind am Schüttrand 12 Rastelemente 27 angeordnet, die mit nicht dargestellten Gegenrastelementen zusammenwirken und den Schüttrand 12 dauerhaft in seiner Betriebslage relativ zum Behälter 2 festhalten.

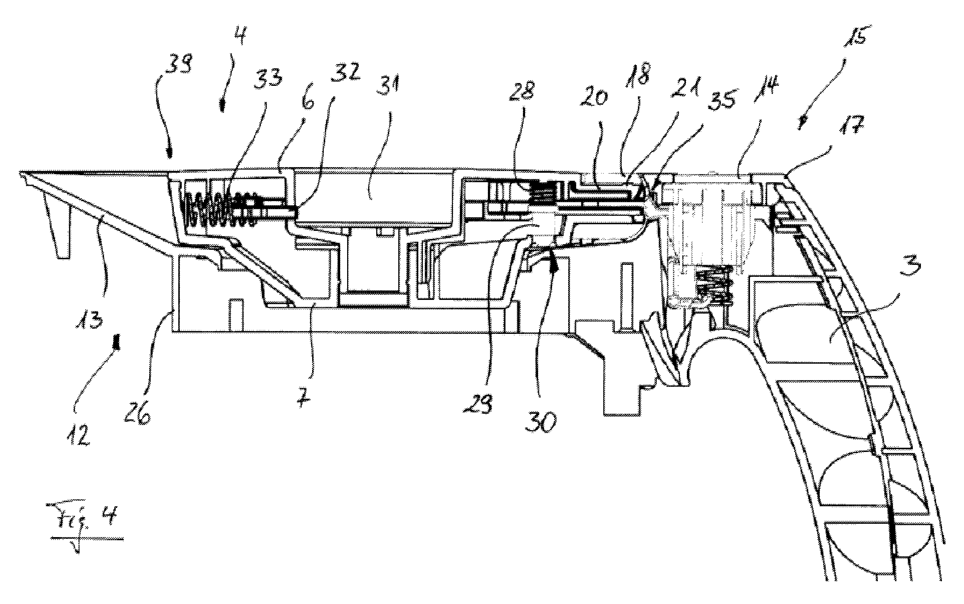

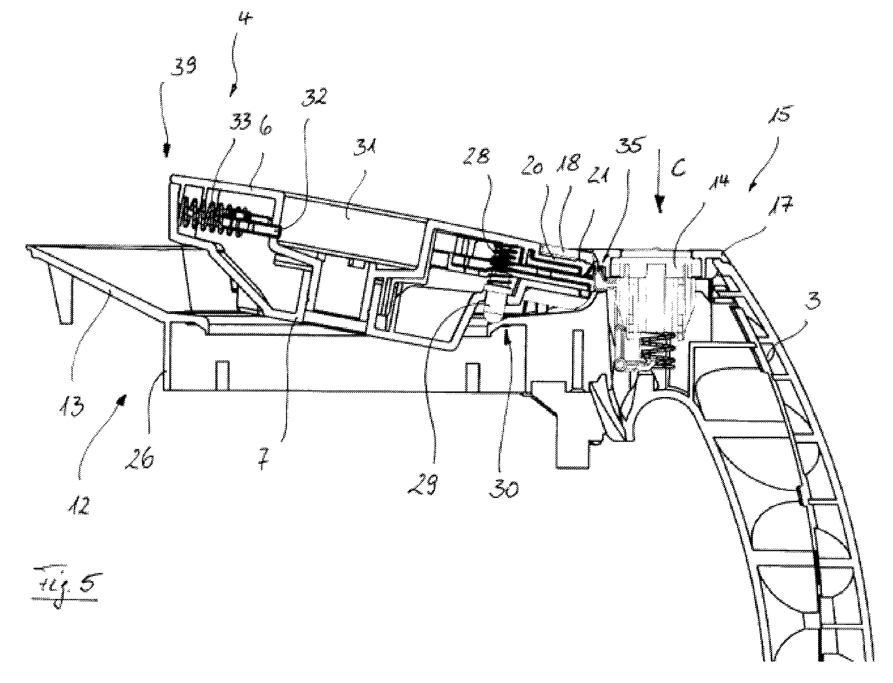

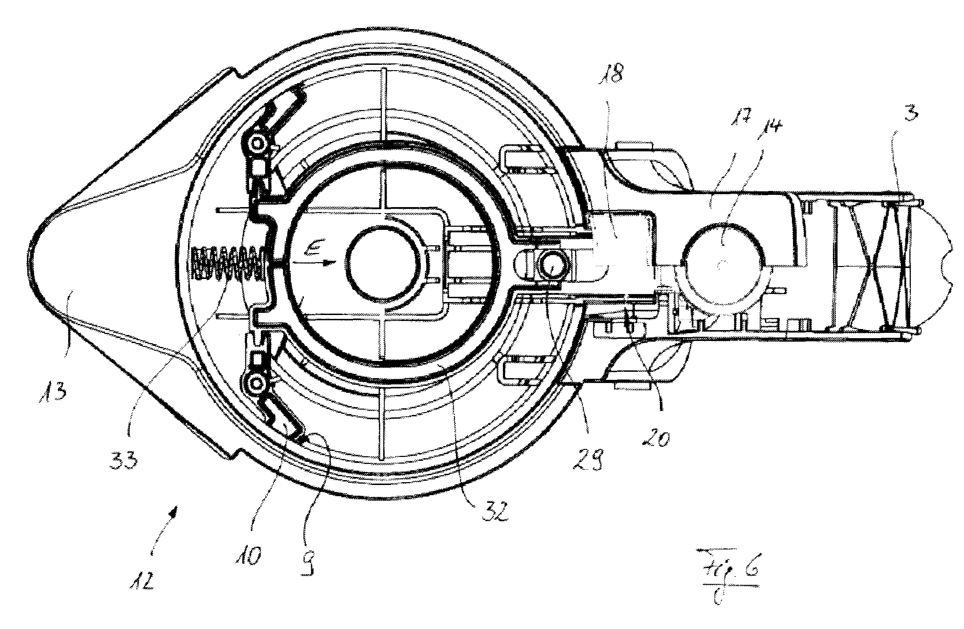

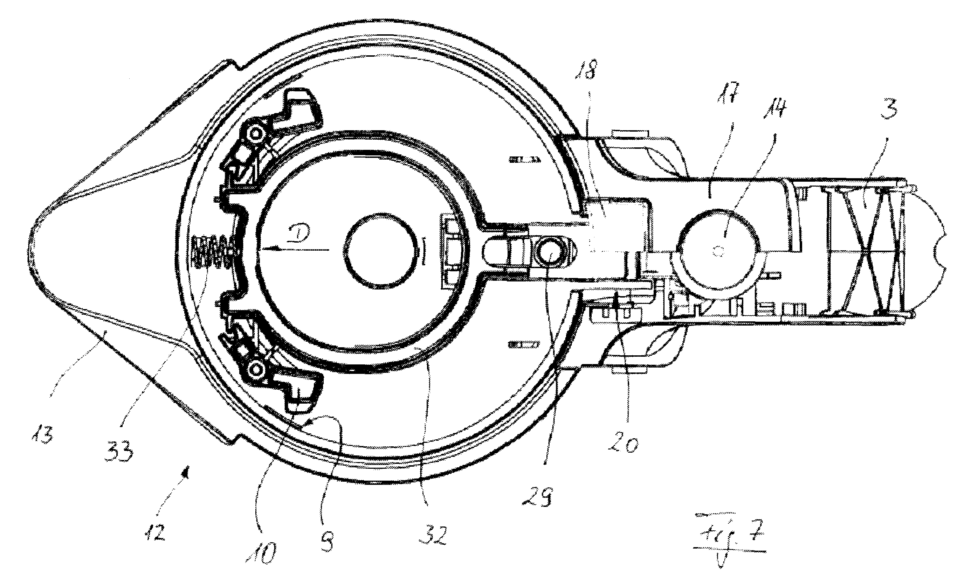

Die Figuren 4 und 5 zeigen jeweils Schnittansichten durch den Schüttrand 12 bei eingesetztem Deckel. In Figur 4 ist der Deckel 4 verriegelt und in seiner Schließstellung dargestellt, wohingegen er in Figur 5 entriegelt und in einer Öffnungsstellung zu erkennen ist. Mit der Schnittansicht der Figur 4 korrespondiert die teilgeschnittene Draufsicht gemäß Figur 6, mit der Schnittansicht gemäß Figur 5 die entsprechende Draufsicht in Figur 7.

In seiner Schließstellung (Figur 4) ist der Deckel 4 bündig im Schüttrand 12 verriegelt. Das Deckeloberteil 6 und das Deckelunterteil 7 bilden auf ihrer dem Ausgießer 13 abgewandten Seite den Verbindungsabschnitt 20. Der Verbindungsabschnitt 20 ist im Köcher 18 eingesetzt. Gegen die Deckeloberseite 6 stützt sich eine Druckfeder 28 ab, die einen Deckelheber 29 durch einen Durchbruch 30 hindurch gegen den Schüttrand 12 drückt. In der dargestellten Schließstellung des Deckels 4 ist die Druckfeder 28 also vorgespannt. Etwa in der Mitte des Deckels 4 befindet sich gemäß Figur 4 ein Freiraum 31, in den das Einlaufventil 8 (Figuren 1 und 2) einsetzbar ist. Zwischen dem Deckeloberteil 6 und dem Deckelunterteil 7 verläuft ein Verriegelungsschieber 32. Er erstreckt sich vom Verbindungsabschnitt 20 um den Freiraum 31 herum bis zu einem Vorderrand 39 des Deckels 4 im Bereich des Ausgießers 13. Sein Verlauf ist in den Figuren 6 und 7 deutlich zu erkennen. Im Bereich des Vorderrandes 39 des Deckels 4 stützt sich eine Verriegelungsfeder 33 gegen den Verriegelungshebel 32 ab. In der in Figur 4 dargestellten Schließstellung des Deckels 4 ist die Verriegelungsfeder 33 entspannt. Auf der der Verriegelungsfeder 33 gegenüberliegenden Seite des Verriegelungshebels 32 ist ein Umlenkhebel 34 angeordnet. Er ist in den in Figur 3 bezeichneten Lagerpfannen 23 drehbar im Schüttrand 12 gelagert. Durch einen Durchbruch 35 im Köcher 18 hindurch befindet er sich in direkter Anlage mit dem Verriegelungshebel 32. Der Umlenkhebel 34 weist außerdem eine Anlaufschräge 36 auf, die mit einer Schrägfläche 37 an der Öffnungstaste 14 korrespondiert. Die Öffnungstaste 14 wird durch eine Tastenfeder 38, die sich im Schüttrand 12 abstützt, in ihrer Ausgangslage gehalten.

Wird nun eine Betätigungskraft in der Richtung des Pfeils C der Figur 5 auf die Öffnungstaste 14 aufgebracht, so bewegt sie sich der Federkraft der Tastenfeder 38 entgegen in den Schüttrand 12 hinein. Ihre Schrägfläche 37 gleitet an der Anlaufschräge 36 des Umlenkhebels 34 hinab und vermittelt ihm dadurch eine Drehung entgegen dem Uhrzeigersinn. Der Umlenkhebel 34 gibt diese Bewegung durch den Durchbruch 35 im Köcher 18 über direkte Anlage an den Verriegelungshebel 32 weiter. Dadurch bewegt sich der Verriegelungshebel 32 der Federkraft der Verriegelungsfeder 33 entgegen in Richtung auf den Ausgießer 13 zu. Wie in den Figuren 6 und 7 zu erkennen, ist der Verriegelungshebel 32 mit den Winkelhebeln 10, die in den Figuren 6 und 7 vollständig zu erkennen sind, mechanisch gekoppelt. Durch seine Verschiebung in Richtung des Pfeils D (Figur 7) bewirkt der Verriegelungshebel 32 eine Drehung der Winkelhebel 10, so dass sie mit ihren vorderen Abschnitten aus den in den Figuren 6 und 7 verdeckten Verriegelungstaschen 11 (Figur 1) herausbewegt werden. Damit ist der Deckel 4 entriegelt. Jetzt kann sich die Druckfeder 28 entspannen. Sie drückt den Deckel 4 aus seiner Schließstellung gemäß Figur 4 in eine Öffnungsstellung, wie sie Figur 5 zeigt.

Ist der Deckel 4 geöffnet, wird im Allgemeinen keine Betätigungskraft mehr in Richtung des Pfeils C auf die Öffnungstaste 14 aufgebracht. Daher kann die Tastenfeder 38 die Öffnungstaste 14 in ihre Ausgangsstellung zurückdrücken. Daraufhin entspannt sich die Verriegelungsfeder 33 und drückt den Verriegelungshebel 32 in Richtung des Pfeils E (Figur 6) in dessen Ausgangslage gemäß Figur 4 zurück. Dadurch dreht er die Winkelhebel 10 ebenfalls in ihre Ausgangsstellung zurück, so dass sie durch die Öffnungen 9 in dem Deckelunterteil 7 wieder hindurchragen. Der Deckel 4 hat damit eine Position eingenommen, wie sie Figur 1 zeigt.

Da es sich bei den vorhergehenden, detailliert beschriebene Kanne 1 um Ausführungsbeispiele handelt, kann sie in üblicher Weise vom Fachmann in einem weiten Umfang modifiziert werden, ohne den Bereich der Erfindung zu verlassen. Insbesondere kann die konkrete Ausgestaltung der Verriegelungsmechanik in anderer Form als in der hier beschriebenen folgen. Ebenso kann der Schüttrand in einer anderen Form ausgestaltet werden, wenn dies aus Platz- oder designerischen Gründen notwendig ist. Weiterhin schließt die Verwendung der unbestimmten Artikel "ein" bzw. " eine" nicht aus, dass die betreffenden Merkmale auch mehrfach vorhanden sein können.

### Bezugszeichenliste

- 1: Kanne
- 2: Behälter
- 3: Griff
- 4: Deckel
- 5: Scharnier
- 6: Deckeloberteil
- 7: Deckelunterteil
- 8: Einlaufventil
- 9: Öffnung
- 10: Winkelhebel
- 11: Verriegelungstasche
- 12: Schüttrand
- 13: Ausgießer
- 14: Öffnungstaste
- 15: Oberes Ende des Griffs 3
- 16: Öffnung
- 17: Schüttrandabdeckung
- 18: Köcher
- 19: Lagerzapfen
- 20: Verbindungsabschnitt
- 21: Verschnappwulst
- 22: Arretierrippen
- 23: Lagerpfanne
- 24: Führungsrippen
- 25: Zentriernasen
- 26: Flansch
- 27: Rastnase
- 28: Druckfeder
- 29: Deckelheber
- 30: Durchbruch im Deckel 4
- 31: Freiraum
- 32: Verriegelungshebel
- 33: Verriegelungsfeder
- 34: Umlenkhebel
- 35: Durchbruch im Köcher 18
- 36: Anlaufschräge
- 37: Schrägfläche
- 38: Tastenfeder
- 39: Vorderrand des Deckels 4
- A: Montagerichtung
- B: Demontagerichtung
- C: Richtung einer Betätigungskraft
- D: Entriegelungsrichtung
- E: Verriegelungseinrichtung

## Patentansprüche

1. Haushaltsgerät (1) zur Aufnahme einer Flüssigkeit mit einem Behälter (2), mit einem schwenkbaren Deckel (4), mit einer Schwenkhalterung (5), in der der Deckel (4) um eine Schwenkachse (19) an dem Behälter (2) zwischen einer Schließ- und einer Öffnungsstellung schwenkbar gelagert ist, und aus der der Deckel (4) entnehmbar ausgebildet ist, mit einer Verriegelungseinrichtung (10, 11, 32, 33, 34) im Deckel (4), die ihn in der Schließstellung am Behälter (2) verriegelt, und mit einer entfernt vom Deckel (4) angeordneten Betätigungseinrichtung (14), die eine Entriegelung des Deckels (4) ermöglicht, wobei die Betätigungseinrichtung (14) so ausgebildet ist, dass sie zur Entriegelung des Deckels (4) eine Druckkraft auf die Verriegelungseinrichtung (10, 11, 32, 33, 34) überträgt, **dadurch gekennzeichnet, dass** die Schwenkhalterung (5) einen Köcher (18) umfasst, der schwenkbar an dem Behälter (2) gelagert ist und in dem der Deckel (4) mit einem Verbindungsabschnitt (20) befestigbar ist.

2. Haushaltsgerät (1) nach Anspruch 1, **dadurch gekennzeichnet, dass** der Verbindungsabschnitt (20) in den Köcher (18) einsteckbar ist und eine Wulst (21) zur Arretierung des Verbindungsabschnitts (20) im Köcher (18) umfasst.

3. Haushaltsgerät (1) nach einem der obigen Ansprüche, **dadurch gekennzeichnet, dass** zwischen dem Behälter (2) und dem Deckel (4) ein Federelement (28) angeordnet ist, das den Deckel (4) in die Öffnungsstellung vorspannt.

## Claims

1. Domestic appliance (1) for receiving a liquid with a container (2), with a pivotable cover (4), with a pivot bearing (5), in which the cover (4) is mounted on the container (2) so as to be pivotable about a pivot axis (19) between a closed and open position, and the cover (4) is embodied so as to be removable therefrom, with a locking device (10, 11, 32, 33, 34) in the cover (4), which locks it in the closed position on the container (2), and with an actuation device (14) arranged remotely from the cover (4), which actuation device (14) enables an unlocking of the cover (4), wherein the actuation device (14) is embodied such that it transfers a compressive force to the locking device (10, 11, 32, 33, 34) to unlock the cover (4), **characterised in that** the pivot bearing (5) comprises a receptacle (18), which is mounted on the container (2) in a pivotable manner and in which the cover (4) can be fastened to a connecting segment (20).

2. Domestic appliance (1) according to claim 1, **characterised in that** the connecting segment (20) can be inserted into the receptacle (18) and comprises a bead (21) for latching the connecting segment (20) in the receptacle (18).

3. Domestic appliance (1) according to one of the preceding claims, **characterised in that** a spring element (28) is arranged between the container (2) and the cover (4), which pretensions the cover (4) into the open position.

## Revendications

1. Appareil ménager (1) destiné à réceptionner un liquide, comprenant un réservoir (2), comprenant un couvercle pivotant (4), comprenant un support pivotant (5), dans lequel le couvercle (4) est logé de manière pivotante entre une position de fermeture et une position d'ouverture autour d'un axe de pivotement (19) sur le réservoir (2), et à partir duquel support pivotant le couvercle (4) est réalisé de manière amovible, comprenant un dispositif de verrouillage (10, 11, 32, 33, 34) dans le couvercle (4), lequel dispositif de verrouillage le verrouille sur le réservoir (2) dans la position de fermeture, et comprenant un dispositif d'actionnement (14) disposé à distance du couvercle (4), lequel dispositif d'actionnement permet un déverrouillage du couvercle (4), le dispositif d'actionnement (14) étant réalisé de manière à ce qu'il transmette une force de pression sur le dispositif de verrouillage (10, 11, 32, 33, 34) pour déverrouiller le couvercle (4), **caractérisé en ce que** le support pivotant (5) comprend un fourneau (18) qui est logé de manière pivotante sur le réservoir (2) et dans lequel le couvercle (4) peut être fixé à l'aide d'une section de liaison (20).

2. Appareil ménager (1) selon la revendication 1, **caractérisé en ce que** la section de liaison (20) peut être enfoncée dans le fourneau (18) et **en ce qu'**elle comprend un bourrelet (21) destiné à bloquer la section de liaison (20) dans le fourneau (18).

3. Appareil ménager (1) selon l'une des revendications précédentes, **caractérisé en ce qu'**entre le réservoir (2) et le couvercle (4) est disposé un élément à ressort (28) qui précontraint le couvercle (4) dans la position d'ouverture.
